**Europäisches Patentamt**

**European Patent Office**

**Office européen des brevets**

(11) Veröffentlichungsnummer: **0 248 942**
**A2**

(12) # EUROPÄISCHE PATENTANMELDUNG

(21) Anmeldenummer: **86115330.2**

(22) Anmeldetag: **05.11.86**

(51) Int. Cl.4: **F16F 13/00 , B60K 5/12**

(30) Priorität: **11.06.86 DE 3619687**

(43) Veröffentlichungstag der Anmeldung:
**16.12.87 Patentblatt 87/51**

(84) Benannte Vertragsstaaten:
**DE FR GB SE**

(71) Anmelder: **Firma Carl Freudenberg**
**Höhnerweg 4**
**D-6940 Weinheim/Bergstrasse(DE)**

(72) Erfinder: **Franz, Rainer**
**Nahestrasse 38**
**D-6800 Mannheim(DE)**
Erfinder: **Idigkeit, Werner**
**Kastanienweg 10**
**D-6940 Weinheim(DE)**
Erfinder: **Löschmann, Hartmut**
**Apfelstrasse 5**
**D-6940 Weinheim(DE)**
Erfinder: **Röhner, Gerhard**
**Giselherstrasse 1**
**D-6944 Hemsbach(DE)**
Erfinder: **Kurr, Klaus, Dr.**
**Brunnengasse 9**
**D-6940 Weinheim(DE)**

(74) Vertreter: **Weissenfeld-Richters, Helga, Dr. et al**
**Höhnerweg 2**
**D-6940 Weinheim/Bergstrasse(DE)**

(54) **Zweikammermotorlager.**

(57) Ein Zweikammermotorlager mit hydraulischer Dämpfung, bei dem zwischen dem Arbeits-und dem Ausgleichsraum (15, 16) eine Trennwand (17) angeordnet ist. Die Trennwand wird in einem ersten Teilbereich durch eine zwischen Anshlägen (22, 23) bewegliche Scheibe (26) gebildet. Das so erhaltene Spiel der Scheibe ist motorisch veränderbar. In einem zweiten Teilbereich ist die Trennwand von einem ersten Drosselkanal (3) durchdrungen. Zu diesem ist ein zweiter Drosselkanal motorisch in Reihe oder parallel zuschaltbar.

Fig 1

## Zweikammermotorlager

Die Erfindung betrifft ein Zweikammermotorlager mit hydraulischer Dämpfung, bei dem zwischen dem Arbeits-und dem Ausgleichsraum eine Trennwand angeordnet ist, bei dem die Trennwand in ersten Teilbereich durch eine zwischen Anschlägen bewegliche Scheibe gebildet wird, bei dem die Trennwand in einem zweiten Teilbereich von einem ersten Drosselkanal durchdrungen ist und bei dem dem ersten Drosselkanal motorisch betätigbare Drosselmittel zur Veränderung der Drosselwirkung zugeordnet sind.

Ein Motorlager der vorgenannten Art ist aus der deutschen Offenlegungsschrift 33 40 153 bekannt. Die die Trennwand durchdringende, den Arbeits-mit dem Ausgleichsraum verbindenden Drosselkanal weist dabei motorisch angetriebene Drosselmittel auf, die durch am Motor und/oder Fahrgestell angebrachte Sensoren betätigt sind und dem Zweikammermotorlager in Abhängigkeit von der Art der auftretenden Schwingungen eine unterschiedliche Dämpfungscharakteristik verleihen.

Der Erfindung leigt die Aufgabe zugrunde, ein Zweikammermotorlager der eingangs genannten Art derart weiter zu entwickeln, daß alle von dem Motor ausgehenden Schwingungen in optimaler Weise von der den Motor tragenden Karosserie ferngehalten werden.

Diese Aufgabe wird erfindungsgemäß bei einem Zweikammermotorlager der eingangs genannten Art dadurch gelöst, daß das durch die Anschläge bestimmte Spiel der Scheibe motorisch veränderbar ist und daß die Drosselmittel wenigstens einen zweiten Drosselkanal umfassen, der in Reihe oder parallel zu dem ersen Drosselkanal - schaltbar ist. Eine stufenlose Verstellbarkeit des Spiels der Scheibe und/oder Länge des zweiten Drosselkanals hat sich als zweckmäßig erwiesen.

Bei dem erfindungsgemäßen Zweikammermotorlager ist es vorgesehen, sowohl das Spiel der Scheibe als auch die Wirklänge des Drosselkanals bedarfsweise motorisch zu verändern. Hierzu sind an dem gelagerten Verbrennungsmotor Sensoren vorgesehen, die die unterschiedlichen Betriebszustände in einer repräsentativen Weise erfassen und an eine Rechnereinheit weitergeben. Eine besonders geeignete Führungsgröße für die Erfassung der unterschiedlichen Betriebszustände ist die Drehzahl des Verbrennungsmotors. Sie kann beispielsweise an der Kurbelwelle, am Zündverteiler oder der Einspritzanlage erfaßt werden. Weitere Sensoren können am Fahrgestell, den Achsen und/oder dem Aufbau der dort wirksamen Beschleunigungen messen und der Rechnereinheit zuführen.

Die auf diese Weise gewonnenen Signale werden in der Rechnereinheit umgeformt und für eine optimale Veränderung des Spiels der Scheibe und der Drosselwirkung des Drosselkanals nutzbar gemacht. Beides erfolgt bei dem erfindungsgemäßen Motorlager mit Hilfe von motorischen Antrieben, zweckmäßig von elektromotorischen Antrieben, wobei eine Zusammenfassung in einer in sich geschlossenen Antriebseinheit ebenfalls denkbar ist. Einer Ausführung, bei der das Spiel der Scheibe und die Drosselwirkung des Drosselkanals unabhängig voneinander veränderbar sind, wird der Vorzug gegeben.

Das Spiel der Scheibe wird bei dem erfindungsgemäßen Motorlager zweckmäßig durch eine relative Veränderung der Zuordnung der Anschläge zu der Scheibe variiert. Mindestens einer der Anschläge kann zur Erreichung diesen Zweckes in einer sich senkrecht zur Erstreckung der Scheibe angeordneten Führung bewegbar sein, wobei die Antriebsmittel aus einer motorisch angetriebenen Gewinde-oder Zahnstange bestehen können. Die Verwendung eines elektromagnetischen, hydraulisch oder pneumatisch betätigbaren Antriebes ist ebenfalls möglich.

Die Drosselöffnung des erfindungsgemäßen Motorlagers ist zweckmäßig kanalartig ausgebildet, um eine gute Dämpfungswirkung unter Ausnutzung von Tilgereffekten erzielen zu können. Die damit erzielte Dämpfungswirkung ist an sich nur in einem relativ schmalen Frequenzbereich wirksam, die jedoch bei dem erfindungsgemäßen Motorlager in jedem erforderlichen Maße durch eine entsprechende Vergrößerung der Wirklänge des Drosselkanals erweiterbar ist. Resonanzüberhöhungen des durch das Überfahren von Fahrbahnunebenheiten in eine schwingende Bewegung versetzten Motors lassen sich dadurch bei jeder beliebigen Geschwindigkeit ausgezeichnet unterdrücken. Demnach werden die durch den Motor selbst erregten hochfrequenten Schwingungen von der Karosserie zuverlässig ferngehalten durch eine angepaßte Veränderung des Spiels der Scheibe.

Zur Erreichung diesen Zweckes hat es sich als besonders vorteilhaft erwiesen, wenn die verwendete Rechnereinheit in Abhängigkeit von den speziellen Erfordernissen des jeweiligen Betriebszustandes frei programmierbar ist und somit das Spiel der Scheibe und die Drosselwirkung der Drosselöffnung in dem erforderlichen Maße modifiziert. Auch die Berücksichtigung von Brems-, Flieh- oder Beschleunigungskräften, der Fahrzeugbelastung und der Fahrgeschwindigkeit ist in diesem Falle ohne weiteren Aufwand möglich und gestattet eine optimale Unterbindung der Übertragung störender Schwingungen des Motors auf die Karosserie.

Eine beispielhafte Ausführung des erfindungsgemäßen Motorlagers ist in der in der Anlage beigefügten Zeichnung dargestellt. Es zeigen:

Figur 1 ein Zweikammermotorlager der erfindungsgemäß vorgeschlagenen Art in längsgeschnittener Darstellung.

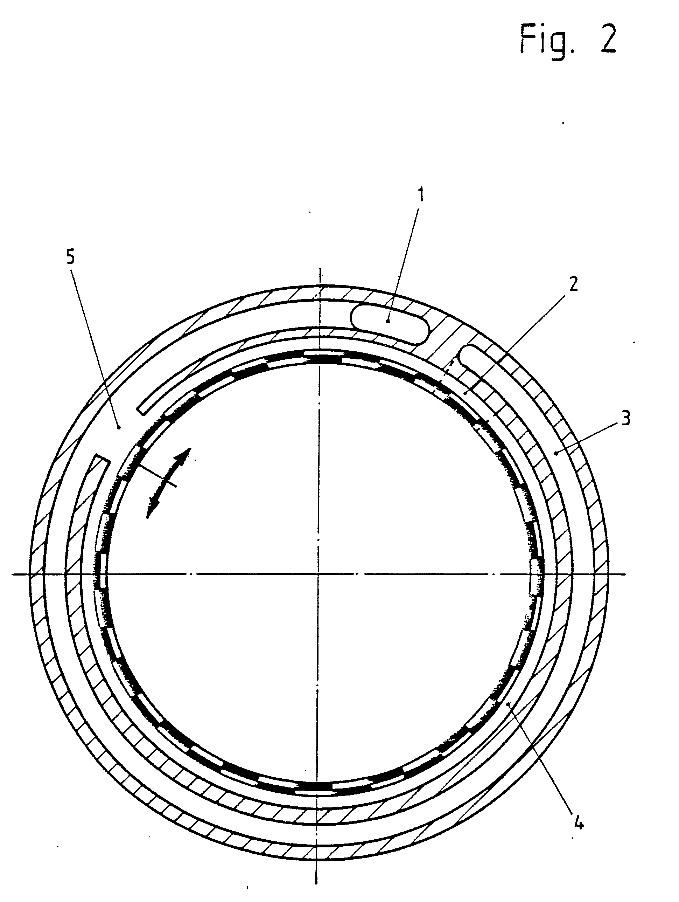

Figur 2 den Bereich des Drosselkanals eines Motorlagers nach Figur 1 in einer Ansicht von oben.

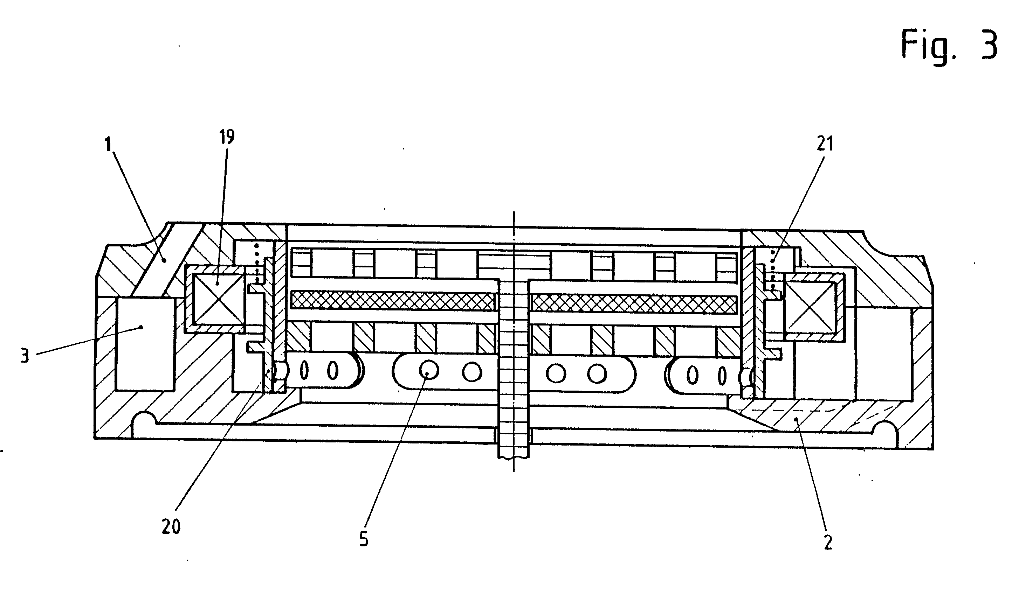

Figur 3 den Bereich des Drosselkanals eines Motorlagers nach Figur 1 in vergrößerter Wiedergabe und längsgeschnittener Darstellung.

Figuren 4 und 5 andere Ausführungen und Zuordnungsmöglichkeiten von Ventilen zu einem Drosselkanal, welcher mit mehreren Querpässen versehen ist.

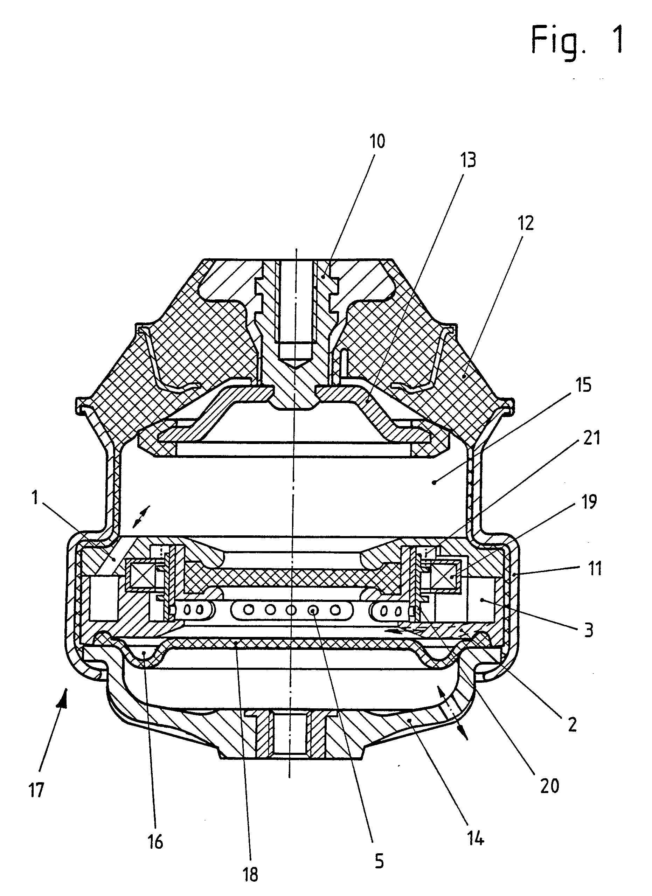

Das in Figur 1 gezeigte Motorlager umfaßt das Auflager 10 und das Traglager 11, die durch die hohlkegelig ausgebildete Tragfeder 12 aus Gummi verbunden sind. Das Traglager 11 umschließt in seinem unteren Teil die starr zugeordnete Trennwand 17, die zwischen dem Arbeitsraum 15 und dem Ausgleichsraum 16 des Motorlagers angeordnet ist. Der Ausgleichsraum 16 wird unterseits durch die Topfmembrane 18 begrenzt, welche bei zunehmender Einspeisung von aus dem Arbeitsraum 15 verdrängtem Flüssigkeitsvolumen in Richtung der Bodenplatte 14 auszuweichen vermag. Die Bodenplatte 14 ist ebenfalls relativ unbeweglich an dem Traglager 11 festgelegt. Das Zweikammermotorlager ist insgesamt von rotationssymmetrischer Gestalt, wodurch eine leichte Unterbringung im Motorraum eines Kraftfahrzeuges möglich ist. Die Festlegung erfolgt durch gegenseitige Verschraubung des Auflagers 10 mit dem Motor und der Bodenplatte 14 mit der tragenden Karosserie.

Eine im Inneren des Arbeitsraumes 15 angeordneter Endanschlag 13 dient als Sicherung gegen unzulässig große Auseinanderbewegungen der Auflagers 10 in bezug auf des Traglager 11. Der Endanschlag 13 hat nach dem Aufbringen des Verbrennungsmotors infolge der sich ergebenden Einfederung der Auflagers 10 , entgegen der Darstellung, unter normalen Betriebsbedingungen stets einen Abstand von der Tragfeder 12.

Der Arbeitsraum 15 und der Ausgleichsraum 16 des gezeigten Zweikammermotorlagers sind durch den Drosselkanal 3 verbunden, der durch die Einläßoffnung 1 mit dem Arbeitsraum 15 und durch die Auslaßöffnung 2 mit dem Ausgleichsraum 16 verbunden ist. Der Arbeitsraum 15, der Drosselkanal 3 und der Ausgleichsraum 16 sind vollständig mit einer inkompressiblen Flüssigkeit gefüllt, im allgemeinen mit einer Mischung aus Glykol und Wasser.

Der Drosselkanal 3 ist bei der gezeigten Ausführung eines Zweikammermotorlagers in dem dem Traglager 11 starr zugeordneten Teil der Trennwand 17 angeordnet. Er ist von rechteckigem Profil und umschließt den inneren Teil der Trennwand mit kreisförmigen Verlauf, wobei in einem Abstand von der Einlaßöffnung 1 und von der Auslaßöffnung 2 ein Querpaß 5 vorgesehen ist. Die Querpaß 5 ist durch ein signalbetätigbares Ventil verschließbar und steht in geöffnetem Zustand des Ventils in einer direkten Verbindung mit dem Ausgleichsraum 16. Der über die Einlaßöffnung 1 in den Drosselkanal 3 eintretende Flüssigkeitsmenge durchströmt daher bei geöffnetem Ventil den Drosselkanal 3 nicht auf ihrer gesamten Länge, sondern nur auf der Länge, die einerseits durch die Einlaßöffnung 1 und andererseits durch den Querpaß 5 begrenzt ist. Die Frequenz der durch Tilgerwirkungen bedämpften Schwingungen entspricht folglich der Frequenz, bei der die in dem genannten Bereich enthaltene Flüssigkeitsmasse durch die Ausbauchungselastizität der Tragfeder 12 in eine Resonanzschwingung versetzbar ist. Es ist offen sichtlich, daß die in dem Drosselkanal hin-und herschwingende Flüssigkeitssäule durch das Schließen des signalbetätigbaren Ventils eine Vergrößerung erfährt, die zu einer entsprechenden Vergrößerung der hin-und herschwingenden Flüssigkeitsmasse und damit zu einer Absenkung der Resonanzfrequenz derselben führt. Die Dämpfungswirksamkeit ist entsprechend verlagert und somit durch die Betätigung des Ventils leicht steuerbar. Das signalbetätigbare Ventil 9 ist bei der Ausführung nach Figur 1 als Schieberventil ausgebildet, bei dem der zylindrische, aus Weicheisen bestehende Steuerschieber 20 radial innerhalb einer Magnetspule 19 angeordnet ist. Der Steuerschieber 20 ist bei nicht erregter Magnetspule 19 durch die Kraft der Druckfeder 21 axial gegenüber derselben verlagert und bewirkt ein Verschließen der auf dem Umfang verteilten Mündungen der Querpässe 5. Die bei einer Einfederung des Auflagers 10 über die Einlaßöffnung 1 in den Drosselkanal 3 eintretende Flüssigkeit vermag dieselbe daher erst an deren Ende über die Auslaßöffnung 2 in Richtung des Ausgleichsraumes 16 zu verlassen und nimmt bei einer Ausfederung des Auflagers 10 denselben Weg in umgekehrter Richtung. Die insgesamt in dem Drosselkanal 3 enthaltene Flüssigkeitsmasse bestimmt dementsprechend in Verbindung mit der Ausbauchungselastizität der Tragfeder 13 die Frequenzlage der bedämpften Schwingung.

Eine Erregung der Magnetspule 19 bewirkt eine axiale Verschiebung des Stellschiebers 20 gegen die Kraft der Druckfeder 21, wodurch die Mündungen der Querpässe 5 in Richtung des Ausgleichsraumes freigegeben werden. Die bei einer Einfederung des Auflagers 10 über die Einlaßöffnung in den Drosselkanal 3 eintretende Flüssigkeitsmenge ist dadurch nicht mehr gezwungen, den Drosselkanal auf dessen gesamter Länge zu druchströmen, sondern verläßt dieselbe bereits nach kurzer Zeit über den Querpaß 5, wobei sich bei einer Ausfederung des Auflagers 10 lediglich eine Richtungsumkehr ergibt. Die auf Tilgereffekten beruhende Dämpfungswirkung ist daher in einem entsprechend höher liegenden Frequenzbereich wirksam.

Die Trennwand 17 des Motorlagers nach Figur 1 umschließt in ihrem mittleren Bereich eine kreisringähnlich ausgebildete Scheibe 26 von ebener Gestalt. Dieser ist zwischen den Anschlägen 22, 23 der Trennwand 17 angeordnet und kann relativ steif ausgebildet sein. Eine geringe Flexibilität, die ein Ausbauchen in die Öffnungen der Gitterplatten zuläßt, ist von Vorteil.

Der Anschlag 23 wird durch eine ebene Gitterplatte gebildet, welche relativ zu der Trennwand 17 in einer unverrückbaren Position festgelegt ist. Die Gitterplatte wird im mittleren Teil von einer Stange 24 durchdrungen, welche einen einstückigen Bestandteil des ebenfalls als Gitterplatte ausgebildeten, oberen Anschlages 22 bildet. Die Stange 24 ist an die Topfmembran 18 anvulkanisiert, durch die zentrale Öffnung der Scheibe 26 hindurchgeführt und endet im unteren Teil in dem Linearschrittmotor 25. Bei einer signalbetätigten Steuerung des Linearschrittmotors 25 ergibt sich eine axiale Verlagerung des Anschlages 22 in bezug auf den Anschlag 23 und damit die Möglichkeit, die relative Beweglichkeit der Scheibe 26 bedarfsweise zu verändern. Die von dem Motor erregten, hochfrequenten Schwingungen oberhalb von 30 Hz können daher nicht mehr zum Auftreten von Druckänderungen im Arbeitsraum 15 führen. Rückwirkungen auf das Traglager 11 und damit die abstützende Karosserie sind nich mehr möglich.

Die Trennwand 17 der gezeigten Ausführung umschließt in ihrem mittleren Teil eine kreisförmig begrenzte, flexible Membran. Diese vermag die vom Motor erregten, hochfrequenten Schwingungen oberhalb von 30 Hz durch ihre Nachgiebigkeit zu kompensieren und verhindert auf diese Weise das Auftreten von Druckänderungen in dem Arbeitsraum 15, die durch entsprechende Schwingungen verursacht sind. Entsprechende Schwingungen sind dadurch im Traglager 11 nicht feststellbar und werden ausgezeichnet isoliert.

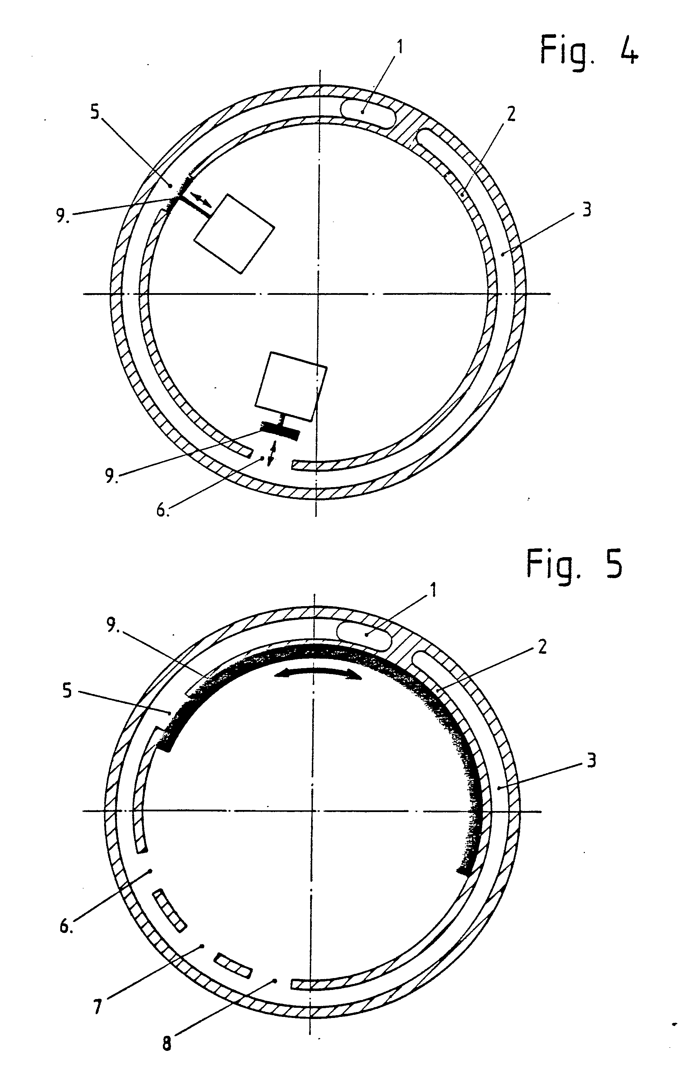

Die Figuren 4 und 5 zeigen zwei verschiedene Ausführungsmöglichkeiten hinsichtlich der Gestaltung des Drosselkanals, von Querpässen und Ventilen. Im erstgenannten Falle sind zwischen der Ein-und der Auslaßöffnung 1,2 der Drosselkanals 3 zwei Querpässe 5,6 angeordnet, im letztgenannten Falle vier Querpässe 5,6,7,8. Die Auslaßöffnung 2 ist in beiden Fällen in einer von der Einlaßöffnung 1 abweichenden Ebene angeordnet und deshalb unsichtbar gezeichnet.

Den Querpässen 5,6 sind bei der Ausführung nach Figur 4 zwei elektromagnetisch betätigte Kükenventile 9 zugeordnet, die unabhängig voneinander betätigbar sind und jeweils einen eigenen Antrieb haben.

Bei der Ausführung nach Figur 5 ist den Mündungen aller Querpässe 5,6,7,8 ein durch einen nicht dargestellten Schrittmotor angetriebener zentraler Steuerschieber 9 zugeordnet. Dieser kann durch relative Verdrehung über eine zunehmende Anzahl von Mündungen geschoben werden, was zu einer Blockierung der Durchlässigkeit der entsprechenden Querpässe führt. Eine Vergrößerung der Anzahl der Querpässe erfordert in diesem Falle lediglich die zusätzliche Anbringung einer weiteren Bohrung. Eine äußerst feinstufige Abstimmung der Dämpfungswirksamkeit auf unterschiedliche Frequenzen ist dadurch leicht erzielbar.

**Ansprüche**

1. Zweikammermotorlager mit hydraulischer Dämpfung, bei dem zwischen dem Arbeits-und dem Ausgleichsraum eine Trennwand angeordnet ist, bei dem die Trennwand in einem ersten Teilbereich durch eine zwischen Anschlägen bewegliche Scheibe gebildet wird, bei dem die Trennwand in einem zweiten Teilbereich von einem ersten Drosselkanal durchdrungen ist und bei dem dem ersten Drosselkanal motorbetätigbare Drosselmittel zur bedarfsweisen Vergrößerung der Drosselwirkung, zugeordnet sind, dadurch gekennzeichnet, daß das durch die Anschläge (22, 23) bestimmte Spiel der Scheibe (26) motorisch veränderbar ist und daß die Drosselmittel wenigstens einen zweiten Drosselkanal umfassen, der in Reihe oder parallel zu dem ersten Drosselkanal (3) schaltbar ist.

2. Zweikammermotorlager nach Anspruch 1, dadurch gekennzeichnet, daß das Spiel der Scheibe (26) und/oder die Länge des zweiten Drosselkanals stufenlos veränderbar ist.

Fig. 1

0 248 942

Fig. 2

Fig. 3

0 248 942

Fig. 4

Fig. 5